(19) Europäisches Patentamt / European Patent Office / Office européen des brevets

(11) **EP 1 926 247 B1**

(12) **FASCICULE DE BREVET EUROPEEN**

(45) Date de publication et mention
de la délivrance du brevet:
**19.08.2009   Bulletin 2009/34**

(51) Int Cl.:
***H04L 9/32*** (2006.01)

(21) Numéro de dépôt: **07120788.0**

(22) Date de dépôt: **15.11.2007**

(54) **Procédé et système de controle du verrouillage/déverrouillage des fonctions d'accès réseau d'un terminal a fonctions multiples**

Steuerverfahren und -system zum Sperren/Entsperren der Netzwerkszugangsfunktionen eines Multifunktionsendgerätes

Method and system for controlling locking/unlocking of the network acces functions of a multiple functions terminal

(84) Etats contractants désignés:
**DE ES GB IT**

(30) Priorité: **23.11.2006   FR 0610274**

(43) Date de publication de la demande:
**28.05.2008   Bulletin 2008/22**

(73) Titulaire: **SAGEM MOBILES**
**75015 Paris (FR)**

(72) Inventeurs:
• **Heurtaux, Frédéric**
**13610 LE PUY SAINTE REPARADE (FR)**
• **Jorel, Jean-Charles**
**95800 CERGY (FR)**

(74) Mandataire: **Cabinet Plasseraud**
**52, rue de la Victoire**
**75440 Paris Cedex 09 (FR)**

(56) Documents cités:
**EP-A- 1 675 029          WO-A-20/04025896**
**WO-A-20/05051018**

**Description**

L'invention concerne le contrôle du verrouillage/déverrouillage des fonctions d'accès réseau des terminaux à fonctions multiples.

Les terminaux à fonctions multiples jouent un rôle prépondérant croissant dans le cadre de l'échange de données, de services audio, vidéo entre utilisateur de ces terminaux, en raison, d'une part, de l'augmentation constante des performances de traitement de ces derniers, et, d'autre part, des capacités de transmission en débit et/ou en largeur de bande admissible des réseaux autorisant ces échanges.

L'un des exemples typique, non limitatif, de ce type de terminaux est donné par les terminaux ou combinés de téléphonie mobile, lesquels permettent l'exécution de fonctions multiples, alors que les réseaux de téléphonie mobile dans lesquels le réseau GSM, ou le réseau UMTS, plus récent, illustrent l'augmentation croissante des capacités de transmission de ce derniers.

Lorsque, en particulier, les terminaux multifonctions précités sont des combinés de téléphonie mobile, ils permettent la mise en oeuvre de nombreuses fonctions, proposées et mises en oeuvre sous le contrôle de l'opérateur réseau.

En règle générale, les terminaux à fonction multiple comportent le plus souvent, outre une unité centrale de traitement, un processeur de sécurité en communication avec cette dernière et permettant l'exécution d'un système de cryptographie à clé publique, permettant ou participant à la mise en oeuvre de ces fonctions multiples.

C'est le cas des combinés de téléphonie mobile, lesquels comportent habituellement une carte SIM pour Subscriber Identity Module en anglais, laquelle joue le plus souvent le rôle de processeur de sécurité.

Une carte SIM est en fait une carte à puce contenant une mémoire et un microcontrôleur. Les cartes SIM les plus récentes sont en mesure d'héberger des applications destinées à l'abonné. Les opérateurs réseau GSM ou UMTS peuvent actualiser à distance le contenu de certains fichiers de la carte SIM. Le microcontrôleur assure l'accès aux fichiers de données et d'applications, en termes de droits d'accès aux fonctions du terminal ou combiné mobile, notamment les fonctions de cryptographie, liées par exemple à des valeurs de code d'accès, et l'exécution des applications ou fonctions contrôlées par l'opérateur réseau.

De manière plus spécifique, le contrôle des fonctions précitées est exécuté au moyen d'un mécanisme de restriction/inhibition de fonctions techniques ou de services au niveau de chaque combiné, ainsi que défini à minima par la norme ETSI TS 101 624 V7.0.0 et désigné verrouillage de carte SIM, ou SIMLOCK en anglais.

Selon la norme précitée, les restrictions concernent essentiellement le verrouillage de l'accès réseau, le combiné mobile pouvant, par exemple, uniquement se connecter sur un ensemble prédéfini de réseaux GSM/UMTS. D'autres fonctions techniques peuvent en outre être protégées par ce mécanisme, comme par exemple, l'accès à l'INTERNET par le protocole WAP pour Wireless Application Protocol, en anglais accès aux serveurs MMS de messagerie multimedia, ou autre.

L'utilisateur du combiné est en mesure de réactiver toute fonction technique verrouillée ou restreinte en entrant, par l'intermédiaire du clavier du combiné, une valeur de code de déverrouillage spécifique, relativement court et comportant entre 8 et 16 chiffres décimaux.

Habituellement, des codes de verrouillage/déverrouillage sont disponibles simultanément sur un combiné donné, chacun des codes précités activant ou inhibant une ou plusieurs fonctions techniques ou de services.

Les codes de verrouillage/déverrouillage sont engendrés aléatoirement dans les installations du fabricant de cartes SIM et stockés dans chaque combiné, avant d'être communiqués à l'opérateur réseau par l'intermédiaire d'un canal de communication défini d'un commun accord.

Le mode opératoire précité présente toutefois, les inconvénients ci-après.

La courte longueur des codes de verrouillage/déverrouillage rend très difficile la protection de ces derniers. En particulier, ces codes sont trop courts pour former des signatures obtenues par un algorithme de signature à clefs asymétriques, de sorte qu'ils sont, le plus souvent, protégés par des algorithmes cryptographiques à clés symétriques.

En raison de la courte longueur des codes, il est relativement aisé de conduire une attaque exhaustive pour retrouver les codes ou en définir de nouveaux. La protection peut varier d'une plateforme hôte à une autre, en fonction des capacités de sécurité du matériel.

Des fuites ou compromissions des codes peuvent émaner des fabricants de cartes SIM, car :

- ils produisent ces codes et doivent les inscrire dans chaque combiné ;
- ils doivent être capables de communiquer ces codes à un opérateur réseaux même après une durée temporelle déterminée.

En conséquence, ces codes sont maintenus longtemps dans les bases de données du fabricant, lesquelles doivent être hautement sécurisées.

Ce fait peut détériorer les relations entre les fabricants et les opérateurs, car, lorsqu'une fuite se produite, il existe toujours un doute quant à l'origine de la fuite, opérateur réseau ou bases de données du fabricant.

Le document WO 2004/025896 concerne la vérification séparée au niveau fabrication et distribution (utilisation) par chargement de logiciels dans un terminal, muni d'une mémoire cryptographique, une clé publique de fabrication étant chargée dans la mémoire cryptographique.

Un logiciel d'application est signé avec une clé privée de fabrication correspondant à la clé publique de fabrication puis chargé dans la mémoire de données.

Une clé publique de produit distincte de la clé publique de fabrication est chargée dans la mémoire cryptographique, pour vérifier d'autres éléments de données ou de programmes qui seront chargés ultérieurement, ces autres éléments étant signés au moyen d'une clé privée de produit correspondant à la clé publique de produit.

Le processus décrit permet une séparation des moyens et des secrets mis en oeuvre par le fabricant et le distributeur (utilisateur) du terminal.

La présente invention a pour objet de remédier à l'ensemble des inconvénients précités.

En particulier, un objet de la présente invention est le renforcement de la sécurisation de la gestion des codes de verrouillage/déverrouillage des fonctions d'accès réseau de terminaux à fonctions multiples, notamment des cartes SIM formant le processeur de sécurité de ces derniers.

Un autre objet de la présente invention est en outre de rendre la gestion des codes de verrouillage/déverrouillage par les fabricants de processeurs de sécurité, notamment de cartes SIM, totalement indépendante de celle opérée par les opérateurs réseau, le procédé et le système objets de l'invention permettant de supprimer la nécessité, pour les fabricants, de connaître les codes de verrouillage/déverrouillage des combinés.

Un autre objet de la présente invention est la mise en oeuvre d'un mécanisme de sécurisation de la gestion des codes de verrouillage/déverrouillage des fonctions d'accès réseau des terminaux à fonctions multiples, à partir d'une plateforme matérielle minimale incluant une entité de lancement ou amorçage (boot) sécurisé permettant au moins une authentification avant lancement, fournie soit par amorçage verrouillé par mot de passe à usage unique, OTP pour One Time Password en anglais, soit par Code ROM de sécurité disponible sur des puces plus récentes.

Un autre objet de la présente invention est la mise en oeuvre d'un environnement d'exécution de confiance fournissant un procédé et un système de contrôle renforcé du verrouillage/déverrouillage des fonctions d'accès réseau des terminaux à fonctions multiples, cet environnement pouvant, de manière avantageuse non limitative, être mis en oeuvre grâce à une carte SIM.

Un autre objet de la présente invention, dans le cadre de l'environnement de confiance précité, est la mise en oeuvre d'une parade efficace et robuste contre les attaques de bidouilleurs malveillants tentant d'altérer ou supprimer des données cryptographiques signées par l'opérateur du réseau.

Un autre objet de la présente invention, dans le cadre de l'environnement de confiance précité, est la mise en oeuvre d'une parade efficace et robuste contre les attaques exhaustives, visant à reconstituer un ou plusieurs codes de verrouillage/déverrouillage, par contrôle du rythme de réponse et/ou du nombre de réponses du processeur de service ou de la carte SIM à l'authentification du code de verrouillage/déverrouillage entré par l'utilisateur, ce qui permet de rendre toute attaque exhaustive quasiment impossible ou très difficile.

Un autre objet de la présente invention, dans le cadre de l'environnement de confiance précité, est enfin, bien que tout fabricant de carte SIM ou de processeur de sécurité et tout opérateur de réseau soient amenés à partager des secrets, la mise en oeuvre de cet environnement de confiance en l'absence d'adjonction de nouvelles contraintes relationnelles entre ces derniers.

Le procédé et le système de contrôle du verrouillage/déverrouillage des fonctions d'accès réseau d'un terminal à fonctions multiples muni d'un processeur de sécurité, objets de l'invention, exécutent un système de cryptographie à clé publique.

Ils sont remarquables en ce qu'ils consistent à respectivement permettent d'allouer à ce terminal une clé publique d'origine servant à vérifier l'intégrité des données chargées dans ce terminal, engendrer un couple de clés, clé publique, clé privée associées au réseau d'accès de ce terminal, engendrer un certificat d'approbation d'origine du terminal contenant ces clés publiques, clé publique d'origine et clé publique associée au réseau d'accès de ce terminal, et à établir pour initialisation un certificat de verrouillage de ce terminal contenant au moins le certificat d'approbation d'origine de ce terminal, des données de configuration initiale de ce terminal et une séquence de données aléatoires et à mémoriser le certificat de verrouillage et la clé publique associée au réseau d'accès de ce terminal, signés numériquement à partir d'une clé privée compatible avec la clé publique d'origine dans une zone sécurisée du processeur de sécurité. Sur lancement pour utilisation de ce terminal par introduction d'un code par un utilisateur, ils permettent de vérifier au moins, en l'absence de certificat de déverrouillage d'au moins une fonction ou en présence d'un certificat de déverrouillage invalide, l'intégrité de ce certificat de verrouillage et les éléments contenus dans ce certificat de verrouillage, puis de déverrouiller et autoriser l'utilisation de ce terminal ou d'une fonction spécifique de ce terminal, conditionnellement à la vérification réussie de ce certificat de verrouillage et à la validité du code introduit. Ce terminal ou cette fonction spécifique est maintenue verrouillée, en l'absence d'autorisation d'utilisation, sinon.

Selon un autre aspect remarquable du procédé et du système objets de la présente invention, en présence d'un certificat de déverrouillage valide, ce certification de déverrouillage est substitué au certificat de verrouillage, pour poursuite du processus.

Selon un autre aspect remarquable du procédé et du système objets de l'invention, l'étape de vérification du certificat de verrouillage inclut au moins la transmission, du terminal au processeur de sécurité, du certificat de verrouillage, du certificat de déverrouillage s'il existe et du code utilisateur.

Selon un autre aspect remarquable du procédé et du système objets de l'invention, le processeur de sécurité exécute, en particulier, la vérification de l'intégrité du certificat d'approbation d'origine du terminal, et, sur vérification réussie, la validation du certificat de verrouillage au moyen de la clé publique d'origine, et, suite à cette validation, l'établissement de l'ensemble des codes susceptibles d'être introduits par l'utilisateur, à partir de la séquence de données aléatoires contenue dans le certificat de verrouillage et d'une fonction technique ou de service spécifique exécutée par le processeur de sécurité.

Selon un autre aspect remarquable du procédé et du système objets de l'invention, la fonction spécifique précitée permet d'engendrer l'ensemble des codes uniques valides susceptibles d'être engendrés par l'utilisateur, un code associé à une fonction du terminal étant engendré pour un terminal et un seul.

Selon un autre aspect, le procédé et le système objets de l'invention sont enfin remarquables en ce que le processeur de sécurité compare tout code entré par l'utilisateur à l'ensemble des codes uniques valides. Si le code entré par l'utilisateur ne correspond à aucun des codes de l'ensemble des codes uniques valides, le processeur de sécurité engendre un code d'erreur, retourné au terminal et la configuration du terminal correspondant au certificat de verrouillage ou à un certificat de déverrouillage préexistant est maintenue.

Sinon, si le code entré par l'utilisateur correspond à un code unique de l'ensemble des codes uniques, le processeur de sécurité engendre un certificat de déverrouillage relatif à la fonction correspondante et vérifie l'intégrité de ce certificat de déverrouillage.

Le procédé et le système de contrôle du verrouillage/déverrouillage des fonctions d'accès réseau d'un terminal à fonctions multiples muni d'un processeur de sécurité, objets de l'invention, seront mieux compris à la lecture de la description et à l'observation des dessins ci-après dans lesquels :

- la figure 1 représente, à titre illustratif, un organigramme général des étapes de mise en oeuvre du procédé objet de l'invention ;
- la figure 2 représente, à titre illustratif, un organigramme d'un détail de mise en oeuvre des étapes de vérification du certificat de verrouillage et de validation du code utilisateur représentées à la figure 1 ;
- la figure 3 représente l'architecture d'un système de contrôle du verrouillage/déverrouillage des fonctions d'accès réseau d'un terminal à fonctions multiples muni d'un processeur de sécurité, objet de l'invention, dans un mode de mise en oeuvre préférentiel non limitatif pris à titre d'exemple, dans lequel le terminal est un terminal de téléphonie mobile et le processeur de sécurité une carte SIM.

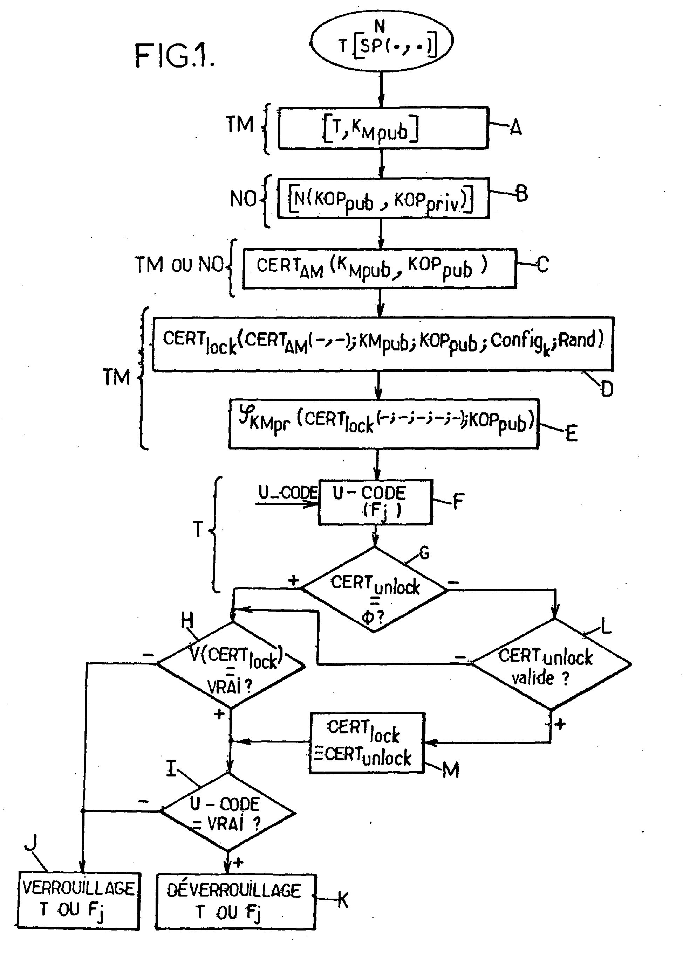

Une description plus détaillée du procédé de contrôle du verrouillage/déverrouillage des fonctions d'accès réseau d'un terminal à fonctions multiples muni d'un processeur de sécurité, exécutant un système de cryptographie à clé publique, conforme à l'objet de la présente invention, sera maintenant donnée en liaison avec la figure 1.

Dans la description ci-après, dans les relations les variables représentées par des points sont considérées comme non encore instanciées et les variables représentées par des tirets comme instanciées à une étape précédente.

En référence à la figure précitée, on considère un terminal T devant accéder à un réseau N, ce terminal T étant équipé d'un processeur de sécurité SP(.,.).

L'architecture du réseau et du terminal devant accéder à ce dernier ainsi que celle du processeur de sécurité SP ne sont pas limitatives, le procédé objet de la présente invention s'appliquant finalement à tout terminal à fonctions multiples séparées ou sélectionnables muni d'un processeur de sécurité.

Ainsi qu'il apparaît en figure 1, le procédé objet de l'invention consiste en une étape A à allouer au terminal T une clé publique d'origine notée $K_{Mpub}$ servant à vérifier l'intégrité des données chargées dans le terminal.

On rappelle que la clé publique d'origine $K_{Mpub}$ peut être chargée dans le terminal considéré par le fabricant de terminaux TM, seule cette clé publique $K_{Mpub}$ étant chargée et présente dans tout terminal considéré. On rappelle en outre que, conformément au système de cryptographie à clé publique, la clé privée associée à cette clé publique d'origine $K_{Mpub}$ n'est aucunement présente dans le terminal T ou dans tout terminal considéré. L'opération de l'étape A est représentée par la relation :

$$\left[ T, K_{Mpub} \right].$$

On indique enfin, que la vérification de l'intégrité des données chargées dans le terminal T peut être effectué par une opération de vérification de signature de ces données signées par exemple, de manière classique et connue en tant que telle.

L'étape A représentée en figure 1 est suivie d'une étape B consistant à engendrer un couple de clés, clé publique $KOP_{pub}$ et clé privée $KOP_{priv}$ associées au réseau N d' accès du terminal T.

Selon un aspect remarquable du procédé objet de l'invention, on indique que l'opération B est effectuée par l'opérateur ou fournisseur d'accès au réseau NO et que seule la clé publique associée au réseau d'accès du terminal, la clé $KOP_{pub}$, est alors communiquée par exemple au fabricant de terminaux et du terminal T.

En ce qui concerne la génération du couple de clés associées au réseau d'accès du terminal T, on indique que ces clés peuvent être constituées par des clés de l'algorithme de cryptographie RSA ou de tout autre algorithme asymétrique à clé publique.

Sur la figure 1, à l'étape B, l'opération correspondante est notée :

$$\left[ N\!\left( KOP_{pub}, KOP_{priv} \right) \right]$$

L'étape B est alors suivie d'une étape C consistant à engendrer un certificat d'approbation d'origine du terminal, certificat noté :

$$CERT_{AM}\left( K_{Mpub}, KOP_{pub} \right).$$

Pour l'exécution de l'étape C, à titre d'exemple non limitatif, on indique que le fabricant de terminaux TM peut transmettre, par exemple, la clé publique d'origine $K_{Mpub}$ à l'opérateur fournisseur d'accès au réseau NO, ce dernier étant alors en mesure d'engendrer le certificat d'approbation d'origine du terminal noté :

$$CERT_{AM}\left( K_{Mpub}, KOP_{pub} \right).$$

En variante, on indique toutefois que l'étape C peut également être exécutée par le fabricant de terminaux TM car ce dernier dispose des paramètres nécessaires au calcul de ce certificat, c'est-à-dire la clé publique d'origine $K_{Mpub}$, d'une part, et la clé publique $KOP_{pub}$ associée au réseau d'accès du terminal, d'autre part.

On indique que l'exécution de l'étape C, soit par le fabricant de terminaux TM, soit par l'opérateur ou fournisseur d'accès au réseau NO est indifférente car aucun des acteurs précités ne dispose de la totalité des secrets mais dispose au contraire des paramètres nécessaires au calcul de ce certificat, c'est-à-dire des clés publiques $K_{Mpub}$ et $KOP_{pub}$.

En tout état de cause, le fabricant de terminaux TM dispose du certificat d'approbation d'origine du terminal après l'exécution de l'étape C.

L'étape C précitée est suivie d'une étape D consistant à engendrer un certificat de verrouillage du terminal afin de procéder à une initialisation du terminal T considéré.

Le certificat de verrouillage contient au moins le certificat d'approbation d'origine du terminal $CERT_{AM}$ (-,-) obtenu à l'étape C, les clés publiques $K_{Mpub}$ et $KOP_{pub}$ ainsi que des données de configuration notées $Config_k$, k désignant un indice d'identification du terminal par exemple et des données aléatoires notées Rand.

A l'étape D de la figure 1, le certificat de verrouillage du terminal est noté :

$$CERT_{lock}\left( CERT_{AM}\left( -,- \right), K_{Mpub}; KOP_{pub}; Config_k; Rand \right).$$

Le certificat de verrouillage précité et la clé publique $KOP_{pub}$ associés au réseau d'accès du terminal T sont alors signés numériquement en une étape E au moyen d'une clé privée compatible avec la clé publique d'origine $K_{Mpub}$ c'est-à-dire au moyen de la clé $K_{Mpr}$ associée à cette clé publique d'origine.

L'opération de signature de l'étape E peut également être exécutée à partir de toute autre clé certifiée au moyen de la clé $K_{Mpr}$, selon le principe de la propagation de confiance des architectures à clé publique.

L'opération de signature correspondante est bien entendue exécutée par le fabricant de terminaux TM et est noté à l'étape E de la figure 1 :

$$S_{K_{Mpr}}\left(CERT_{lock}\left(-;-;-;-;-\right);KOP_{pub}\right).$$

La valeur de signature précitée obtenue suite à la mise en oeuvre de l'étape E est alors mémorisée dans une zone sécurisée du processeur de sécurité SP par exemple.

Le certificat de verrouillage précité, calculé à l'étape D, et la valeur signée de ce dernier, calculée à l'étape E, comprennent alors le certificat d'approbation d'origine du terminal CERT$_{AM}$, ainsi que la configuration initiale du processus de verrouillage/déverrouillage et du contrôle de ce processus tel que demandé par l'opérateur ou fournisseur d'accès au réseau, ce processus pouvant correspondre à la norme IMEI pour International Mobil Equipment Identity pour lequel le certificat est valide, le numéro de réseau donné par l'opérateur ou fournisseur d'accès au réseau N, les tranches de données relatives à l'identification de l'abonné utilisateur du terminal désigné tranche IMSI pour International Mobil Subcriber Identity, le cas échéant l'inhibition de certaines des fonctions de service du terminal T, par exemple.

Le certificat de verrouillage précité contient en outre, les données aléatoires Rand précitées lesquelles permettent, en définitive, de distinguer tout terminal T$_k$ d'un autre terminal d'un même type.

A l'étape E, l'opération de mémorisation permet ainsi de placer le certificat de verrouillage accompagné de la clé publique KOP$_{pub}$ associée au réseau d'accès du terminal dans le terminal précité T, au moment de la fabrication en usine de ce dernier, et bien entendu de manière avantageuse dans une zone sécurisée du processeur de sécurité SP.

Lors de l'utilisation du terminal considéré par un utilisateur, ce dernier, à l'étape F, est amené à introduire un code noté U_CODE par l'un des périphériques du terminal considéré.

Suite à l'introduction du code précité, le procédé de contrôle du verrouillage/déverrouillage des fonctions d'accès réseau d'un terminal à fonctions multiples, objet de l'invention, consiste à vérifier au moins, à l'étape G, l'existence ou l'absence de certificat de déverrouillage noté CERT$_{unlock}$ d'au moins une fonction ou, à vérifier la présence d'un certificat de déverrouillage invalide.

On comprend que cette étape de vérification, bien que non indispensable lors de la première utilisation du terminal T, est ensuite rendue nécessaire afin de prendre en compte toute utilisation antérieure c'est-à-dire finalement, l'activation de fonctions techniques ou de services F$_j$ déjà exécutées par l'utilisateur au niveau du terminal T.

L'étape de vérification représentée à l'étape G de la figure 1 peut correspondre à une étape de test :

$$CERT_{unlock} = \emptyset\ ?$$

Sur réponse positive au test G de la figure 1, le procédé objet de l'invention consiste à vérifier l'intégrité du certificat de verrouillage CERT$_{lock}$ disponible en permanence dans la mémoire sécurisée du processeur de sécurité.

Une telle opération est illustrée à l'étape H de la figure 1 par l'opération :

$$\mathcal{V}\!\left(CERT_{lock}\right)?$$

L'opération de vérification précitée peut être effectuée par vérification de signature de la valeur de signature mémorisée à l'étape E précédente à partir de la clé publique d'origine K$_{Mpub}$ dont dispose le terminal T. Cette vérification peut être effectuée au moyen de la clé publique d'origine K$_{Mpub}$. Elle permet de vérifier que les éléments spécifiés dans ce certificat sont compatibles, notamment processeur de sécurité PS ou carte SIM du bon opérateur réseau, tranches IMSI et contrôle IMEI vérifiées, par exemple.

Sur réponse négative à l'opération de vérification de l'étape H précitée, une étape J est appelée de verrouillage de l'ensemble des fonctions du terminal T ou à tout le moins, des fonctions techniques ou de services de ce dernier qui correspondent aux données de configuration Config$_k$ contenues dans le certificat de verrouillage.

Au contraire, sur réponse positive à l'étape H de la figure 1, le terminal T peut alors être déverrouillé conditionnellement à la vérification réussie du certificat de verrouillage à l'étape H et à la validité du code U_CODE introduit par l'utilisateur.

Les opérations correspondantes sont représentées à la figure 1 sur réponse positive à l'étape H de vérification de l'intégrité du certificat de verrouillage par une étape de vérification du code U CODE selon la relation :

$$U\_CODE = vrai\,?$$

à l'étape I.

Sur réponse négative au test de l'étape I, le terminal T ou la fonction $F_j$ associée au code U_CODE introduit est maintenu verrouillé à l'étape J.

Au contraire, sur réponse positive au test de l'étape I, alors le déverrouillage du terminal T ou de la fonction $F_j$ peut être effectué à l'étape K grâce par exemple, à l'émission par le processeur de sécurité PS d'un certificat de déverrouillage correspondant aux fonctions de service du terminal effectivement déverrouillées compte tenu de toute situation de déverrouillage antérieure.

Au contraire, sur réponse négative au test de l'étape G, c'est-à-dire en présence d'un certificat de déverrouillage valide existant $CERT_{unlock}$, la validité de ce certificat est vérifiée à une étape L de manière classique.

Sur réponse négative au test de l'étape L, un retour au test de l'étape H peut être effectué.

Au contraire, sur réponse positive au test de l'étape L, le certificat de verrouillage peut alors être substitué au certificat de verrouillage $CERT_{lock}$ pour poursuite du processus à l'étape M et retour par exemple à l'étape I de vérification du code utilisateur.

Sur la figure 1, on a en outre représenté l'identité des acteurs opérant les différentes étapes du procédé objet de l'invention, ces acteurs étant désignés par TM pour le fabricant de terminaux, NO pour l'opérateur ou fournisseur d'accès au réseau, T pour le terminal proprement dit et SP pour le processeur de sécurité équipant ce dernier.

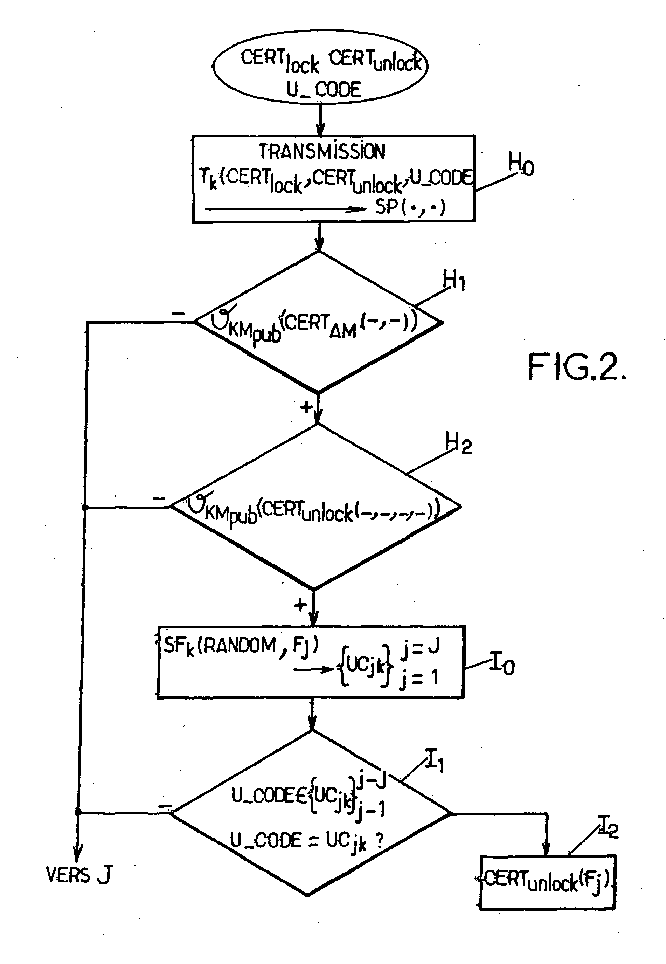

Une description plus détaillée des étapes H de vérification de l'intégrité du certificat de verrouillage et 1 de vérification du code utilisateur représentées en figure 1 sera maintenant donnée en liaison avec la figure 2.

Pour l'exécution des étapes précitées, on rappelle que le terminal T dispose du certificat de verrouillage $CERT_{lock}$ du certificat de déverrouillage $CERT_{unlock}$ si ce dernier existe ainsi que mentionné précédemment en fonction des conditions d'utilisation du terminal et du code utilisateur U_CODE précédemment mentionné.

Pour effectuer l'opération de contrôle de verrouillage/déverrouillage, le terminal T procède en une étape $H_0$ à la transmission du terminal vers le processeur de sécurité SP du certificat de verrouillage, du certificat de déverrouillage si ce dernier existe et du code entré par l'utilisateur.

L'étape $H_0$ de la figure 2 est représentée par la relation :

$$T_k \xrightarrow{\;(CERT_{lock},CERT_{unlock},U\_CODE)\;} SP(.,.).$$

L'étape $H_0$ est suivie d'une étape $H_1$ consistant à vérifier l'intégrité du certificat d'approbation d'origine du terminal, certificat $CERT_{AM}(-,-)$.

A l'étape $H_1$ cette opération est représentée par la relation :

$$\mathcal{V}_{KMpub}\big(CERT_{AM}(-,-)\big).$$

Sur réponse négative à cette opération de vérification, un retour vers l'étape J de verrouillage de la figure 1 est exécuté.

Au contraire, sur réponse positive au test de l'étape $H_1$ une étape $H_2$ est appelée, laquelle consiste à valider le certificat de verrouillage $CERT_{lock}$ au moyen de la clé publique d'origine.

A l'étape $H_2$, cette opération est notée :

$$\mathcal{V}_{KMpub}\big(CERT_{lock}(-,-,-,-,-)\big).$$

Sur réponse négative à l'étape $H_2$, un retour à l'étape J de verrouillage de la figure 1 est exécuté.

Sur réponse positive à l'étape $H_2$, le processeur de sécurité SP exécute alors l'établissement de l'ensemble des codes susceptibles d'être introduits par l'utilisateur, à partir de la séquence de données aléatoires contenue dans le certificat de verrouillage $CERT_{lock}$ et d'une fonction spécifique, notée $SF_k$, exécutée par le processeur de sécurité SP.

A l'étape $I_0$ d'établissement de l'ensemble des codes susceptibles d'être introduits par l'utilisateur, l'opération d'établissement des codes précités est notée par la relation :

$$SF_k(Random, F_j) \rightarrow \{UC_{jk}\}_{j=1}^{j=J}.$$

Dans la relation précédente, on comprend que la fonction spécifique $SF_k$ propre au terminal $T_k$ est exécutée par le processeur de sécurité SP équipant ce dernier, à partir d'un ensemble de fonctions techniques ou de services $F_j$ du terminal T et des valeurs aléatoires Random précitées, pour donner naissance à l'ensemble des codes utilisateurs susceptibles d'être introduit par ce dernier noté :

$$\left\{ UC_{jk} \right\}_{j=1}^{j=J}.$$

D'une manière générale on indique que la fonction spécifique $SF_k$ permet d'engendrer l'ensemble des codes uniques $UC_{jk}$ susceptibles d'être engendrés par l'utilisateur, un code $U_{jk}$ associé à une fonction $F_j$ du terminal étant engendré pour un terminal $T_k$ et un seul. Ainsi, à titre d'exemple, un code $UC_{jk}$ possible doit être engendré pour désactiver le verrouillage d'accès au réseau, un autre code pour activer le verrouillage d'accès ou réseau, un code pour débrider la fonction WAP respectivement inhiber cette dernière, ou autres. La fonction spécifique $SF_k$ peut être exécutée par un algorithme de type HMAC-SHA$_1$, un chiffrement AES/A5-3 ou tout autre algorithme non réversible, activé à partir d'une graine (seed) fournie par l'opérateur ou fournisseur d'accès réseau ON.

On comprend bien sûr que le code utilisateur U_CODE entré par l'utilisateur doit alors correspondre à l'un des codes $UC_{jk}$ de l'ensemble des codes uniques valides engendrés à l'étape $I_0$.

L'étape $I_0$ est alors suivie d'une étape $I_1$ dans laquelle le processeur de sécurité SP compare tout code entré par l'utilisateur U_CODE à l'ensemble des codes uniques valides $\left\{ UC_{jk} \right\}_{j=1}^{j=J}$.

A l'étape I1 cette opération est représentée par la relation :

$$U\_CODE \in \left\{ UC_{jk} \right\}_{j=1}^{j=J}$$

$$\left( U\_CODE = UC_{jk} \right)?$$

Sur réponse négative au test de l'étape I1, le retour vers l'étape J de verrouillage est exécuté.

Sur réponse positive au test de l'étape I1, un certificat de déverrouillage pour la ou les fonctions Fj peut être calculé à l'étape 12 pour exécuter ensuite le déverrouillage à l'étape K de la figure 1.

Ainsi, en référence à la figure 2, on comprend que si le code U_CODE entré par l'utilisateur ne correspond à aucun des codes de l'ensemble des codes uniques valides, le processeur de sécurité SP engendre un code d'erreur lequel est alors retourné au terminal T par l'intermédiaire de l'étape J et la configuration du terminal correspondant au certificat de verrouillage $CERT_{lock}$ ou à un certificat de déverrouillage préexistant $CERT_{unlock}$ est maintenue.

Au contraire, si le code entré par l'utilisateur correspond à un code unique de l'ensemble des codes uniques le processeur de sécurité engendre un certificat de déverrouillage $CERT_{unlock}$ relatif à la fonction de service $F_j$ correspondante du terminal utilisateur et vérifie l'intégrité de ce certificat de déverrouillage dans le cadre de l'étape K représentée en figure 1.

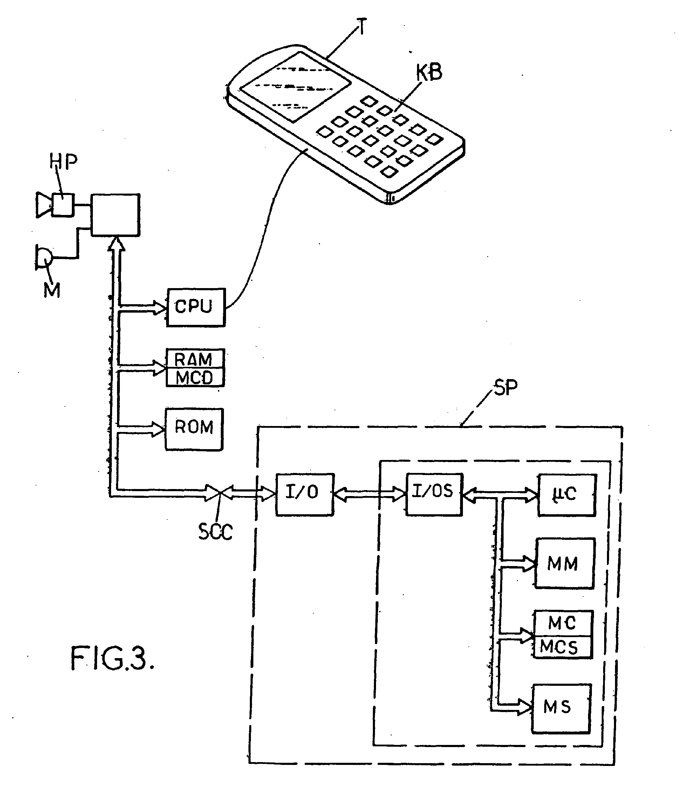

Une description plus détaillée d'un système de contrôle du verrouillage/déverrouillage des fonctions d'accès réseau d'un terminal à fonctions multiples muni d'un processeur de sécurité, objet de l'invention, sera maintenant décrit en liaison avec la figure 3.

Le terminal T est représenté de manière non limitative sous forme d'un terminal de téléphonie mobile muni d'un clavier KB, d'une unité centrale de traitement CPU, d'une mémoire de travail RAM, et d'une mémoire de programme sécurisée ROM par exemple.

La mémoire sécurisée permet de piloter les fonctions de service du terminal T et en particulier tout ce qui concerne les fonctions haut-parleur HP ou microphone par exemple de manière classique.

Le terminal T est en outre équipé d'un processeur de sécurité SP lequel est représenté dans cette situation, de manière non limitative, comme une carte SIM connectée au bus de l'unité centrale CPU du terminal T par l'intermédiaire d'un connecteur de carte SIM noté SCC sur la figure 3.

De manière classique, le processeur de sécurité SP comporte outre un organe d'entrée-sortie I/O, un organe entrée-sortie sécurisé I/OS et un microcontrôleur $\mu C$, au moins un module cryptographique MC à clé publique et bien entendu, une mémoire de travail MM.

L'ensemble des composants précités est implanté dans une zone sécurisée inaccessible du processeur de sécurité SP.

Ainsi qu'on l'a représenté sur la figure 3, le terminal T comporte au moins un module de mémorisation de données cryptographiques MCD afin de permettre notamment la mémorisation de la clés.

On comprend, toutefois, que toute donnée cryptographique correspondant à une clé publique peut être mémorisée à une zone non protégée du terminal T, cette zone pouvant toutefois correspondre à une mémoire flash ou analogue permettant de conserver les données cryptographiques précitées.

La zone MC précitée permet également de mémoriser par exemple le certificat d'approbation d'origine du terminal T certificat désigné :

$$CERT_{AM}\left(K_{Mpub}, KOP_{pub}\right).$$

Cette zone permet également de mémoriser la clé publique $KOP_{pub}$ associée au réseau.

En référence à la même figure 3, on indique que le module de cryptographie du processeur de sécurité SP comporte ainsi que représenté sur la figure précitée, des ressources de mémorisation sécurisées d'une clé privée compatible avec la clé publique d'origine $P_{Mpub}$. Cette zone est notée MCS sur la figure 3.

En outre, le processeur de sécurité SP comporte un module de calcul noté MC d'un certificat de verrouillage du terminal contenant au moins le certificat d'approbation d'origine du terminal les données de configuration de ce terminal et la séquence de données aléatoires désignée Random précédemment dans la description.

Le processeur de sécurité SP comporte enfin, dans le module de calcul MC précité, des ressources de calcul de signatures numériques du certificat de verrouillage précité et de la clé publique $KOP_{pub}$ associée au réseau d'accès du terminal T, ces ressources de calcul de signature opérant à partir de l'algorithme RSA par exemple au moyen de la clé privée compatible avec la clé publique d'origine $K_{Mpub}$.

Les ressources de signature peuvent également être constituées par un module séparé noté MS.

Enfin, ainsi que représenté en outre, en figure 3, le terminal utilisateur T comporte avantageusement une ressource de mémorisation d'au moins un code utilisateur associé à une fonction du terminal T considéré. Les ressources de mémorisation précitées permettent également la mémorisation du certificat de verrouillage $CERT_{lock}$ et d'un certificat de déverrouillage, ces ressources de mémorisation pouvant être constituées par le module MCD précédemment décrit dans la description.

Le processeur de sécurité SP comporte également des ressources de calcul cryptographique, dans le module MC par exemple, permettant en l'absence de certificat de déverrouillage d'au moins une fonction de service du terminal T ou en présence d'un certificat de déverrouillage d'effectuer une vérification de l'intégrité du certificat de verrouillage et des éléments contenus dans ce certificat de verrouillage ainsi que décrit précédemment à l'étape H de la figure 1 et aux sous-étapes $H_0$, $H_1$, $H_2$ de la figure 2.

Enfin, le module cryptographique du processeur de sécurité SP comporte des ressources de déverrouillage et d'autorisation d'utilisation du terminal T ou d'une fonction spécifique de ce dernier conditionnellement à la vérification réussie du certificat du verrouillage $CERT_{lock}$ et à la validité du code utilisateur introduit U_CODE. Les ressources de déverrouillage et d'autorisation d'utilisation sont par exemple avantageusement intégrées au module de calcul cryptographique MC et permettent de maintenir le terminal ou la fonction spécifique $F_j$ verrouillée en l'absence d'autorisation.

L'invention couvre également un produit de programme d'ordinateur comportant une suite d'instructions mémorisées sur un support de mémorisation pour exécution par un ordinateur ou par un terminal utilisateur muni d'un processeur de sécurité.

Lors de cette exécution, le programme correspondant exécute les étapes du procédé tel que décrit précédemment dans la description en liaison avec les figures 1 et 2.

En particulier, le programme précité comporte des modules de programmes de cryptographie à clé publique implantés dans le module cryptographique du processeur de sécurité SP et permettant au moins la vérification d'un certificat de verrouillage $CERT_{lock}$.

Le programme précité comporte, en outre, des modules de commandes de déverrouillage et d'autorisation de l'utilisation du terminal ou d'une fonction $F_j$ de ce terminal, conditionnellement à la vérification réussie du certificat de verrouillage et à la validité du code d'utilisateur introduit U_CODE.

Il permet en outre le maintien du terminal ou d'une fonction technique ou de service de ce terminal en l'état lorsque, au contraire, la condition précitée n'est pas vérifiée. Les modules de commande de déverrouillage sont implantés en zone protégée du processeur de sécurité SP et en particulier dans le module MC par exemple.

Le procédé et le système de contrôle du verrouillage/déverrouillage des fonctions d'accès réseau d'un terminal à fonctions multiples objets de l'invention apparaissent particulièrement avantageux dans la mesure où ils permettent au fabricant de terminaux de ne pas connaître les codes de déverrouillage des terminaux, entièrement gérés dans le processeur de sécurité du terminal et de prémunir le fabricant de tout risque de soupçon d'être à l'origine d'une fuite des codes de déverrouillage.

**Revendications**

1. Procédé de contrôle du verrouillage / déverrouillage des fonctions d'accès réseau d'un terminal à fonctions multiples muni d'un processeur de sécurité, exécutant un système de cryptographie à clé publique, **caractérisé en ce qu'**il consiste au moins à :

   (a) allouer audit terminal une clé publique d'origine ($K_{Mpub}$) servant à vérifier l'intégrité des données chargées dans ledit terminal ;
   (b) engendrer un couple de clés, clé publique ($KOP_{pub}$), clé privée ($KOP_{priv}$) associées au réseau d'accès dudit terminal ;
   (c) engendrer un certificat d'approbation d'origine du terminal ($CERT_{AM}$) contenant lesdites clés publiques, clé publique d'origine et clé publique associée au réseau d'accès dudit terminal ;
   (d) établir pour initialisation un certificat de verrouillage dudit terminal ($CERT_{lock}$) contenant au moins ledit certificat d'approbation d'origine du terminal ($CERT_{AM}$), des données de configuration initiale de ce terminal et une séquence de données aléatoires, et mémoriser ledit certificat de verrouillage et ladite clé publique ($KOP_{pub}$) associée au réseau d'accès dudit terminal, signés numériquement à partir d'une clé privée compatible avec la clé publique d'origine ($KM_{pub}$), dans une zone sécurisée dudit processeur de sécurité ; et,

   • sur lancement pour utilisation de ce terminal par introduction d'un code par un utilisateur ;

   (e) vérifier au moins, en l'absence de certificat de déverrouillage ($CERT_{unlock}$) d'au moins une fonction du terminal ou en présence d'un certificat de déverrouillage ($CERT_{unlock}$) invalide, l'intégrité dudit certificat de verrouillage ($CERT_{lock}$) et les éléments contenus dans ce certificat de verrouillage ; et,
   (f) déverrouiller et autoriser l'utilisation du terminal ou d'une fonction spécifique de ce terminal, conditionnellement à la vérification réussie dudit certificat de verrouillage et à la validité du code introduit et maintenir ledit terminal ou ladite fonction spécifique verrouillé et ne pas en autoriser l'utilisation, sinon.

2. Procédé selon la revendication 1, **caractérisé en ce que**, en présence d'un certificat de déverrouillage ($CERT_{unlock}$) valide, ledit certificat de déverrouillage est substitué audit certificat de verrouillage ($CERT_{lock}$) pour poursuite du processus.

3. Procédé selon l'une des revendications 1 ou 2, **caractérisé en ce que** l'étape de vérification dudit certificat de verrouillage ($CERT_{lock}$) inclut au moins la transmission, dudit terminal audit processeur de sécurité, du certificat de verrouillage ($CERT_{lock}$), du certificat de déverrouillage ($CERT_{unlock}$) s'il existe et du code utilisateur.

4. Procédé selon la revendication 3, **caractérisé en ce que** ledit processeur de sécurité exécute en outre :

   - la vérification de l'intégrité du certificat d'approbation d'origine du terminal ($CERT_{AM}$) ; et, sur vérification réussie,
   - la validation du certificat de verrouillage ($CERT_{lock}$) au moyen de ladite clé publique d'origine ($K_{Mpub}$) ; et, suite à cette validation,
   - l'établissement de l'ensemble des codes susceptibles d'être introduits par l'utilisateur, à partir de ladite séquence de données aléatoires contenue dans ledit certificat de verrouillage ($CERT_{lock}$) et d'une fonction spécifique exécutée par ledit processeur de sécurité.

5. Procédé selon la revendication 4, **caractérisé en ce que** ladite fonction spécifique permet d'engendrer l'ensemble des codes uniques valides susceptibles d'être engendrés par l'utilisateur, un code associé à une fonction du terminal étant engendré pour un terminal et un seul.

6. Procédé selon la revendication 4 ou 5, **caractérisé en ce que** ledit processeur de sécurité compare tout code entré par l'utilisateur à l'ensemble des codes uniques valides, et,

   - si le code entré par l'utilisateur ne correspond à aucun des codes de l'ensemble des codes uniques valides, ledit processeur de sécurité engendre un code d'erreur, retourné audit terminal et la configuration du terminal correspondant au certificat de verrouillage ($CERT_{lock}$) ou à un certificat de déverrouillage ($CERT_{unlock}$) préexistant est maintenue ; sinon,

- si le code entré par l'utilisateur correspond à un code unique de l'ensemble des codes uniques, ledit processeur de sécurité engendre un certificat de déverrouillage (CERT$_{unlock}$) relatif à la fonction correspondante et vérifie l'intégrité de ce certificat de déverrouillage.

7. Procédé selon l'une des revendications 1 à 6, **caractérisé en ce que** l'étape a) est exécutée par le fabricant de terminaux.

8. Procédé selon l'une des revendications 1 à 7, **caractérisé en ce que** l'étape b) est exécutée par l'opérateur ou fournisseur d'accès réseau.

9. Procédé selon l'une des revendications 1 à 8, **caractérisé en ce que** l'étape c) est exécutée soit par le fabricant de terminaux, soit par l'opérateur ou le fournisseur d'accès au réseau.

10. Procédé selon l'une des revendications 1 à 9, **caractérisé en ce que** ladite étape d) est exécutée par le fabricant de terminaux.

11. Système de contrôle du verrouillage/déverrouillage des fonctions d'accès réseau d'un terminal à fonctions multiples, ce terminal étant muni d'un processeur de sécurité, exécutant un système de cryptographie à clé publique, ledit processeur de sécurité comportant au moins un circuit de contrôle d'entrée-sortie sécurisé, un microcontrôleur et au moins un module de cryptographie à clé publique, **caractérisé en ce que** ledit terminal comporte au moins :

   - des moyens de mémorisation de données cryptographiques incluant une clé publique d'origine servant à vérifier l'intégrité des données chargées dans ledit terminal, une clé publique d'un couple de clés, clé publique, clé privée associées au réseau d'accès dudit terminal, un certificat d'approbation d'origine dudit terminal contenant lesdites clés publiques, clé publique d'origine et clé publique associée audit réseau d'accès du terminal ; et, **en ce que** le module de cryptographie dudit processeur de sécurité inclut au moins :

      - des moyens de mémorisation sécurisés d'une clé privée compatible avec ladite clé publique d'origine ;
      - des moyens de calcul d'un certificat de verrouillage dudit terminal contenant au moins ledit certificat d'approbation d'origine du terminal, des données de configuration de ce terminal et une séquence de données aléatoires ;
      - des moyens de signature numérique dudit certificat de verrouillage et de ladite clé publique associée au réseau d'accès dudit terminal, au moyen de ladite clé privée compatible avec ladite clé publique d'origine ;
      - et **en ce que** ledit module de cryptographie dudit processeur de sécurité comporte en outre :

         - des moyens de vérification, en l'absence de certificat de déverrouillage d'au moins une fonction dudit terminal ou en présence d'un certificat de déverrouillage invalide, de l'intégrité dudit certificat de verrouillage et des éléments contenus dans ce certificat de verrouillage, et **en ce que** ledit terminal inclut en outre :
         - des moyens de déverrouillage et d'autorisation d'utilisation dudit terminal ou d'une fonction spécifique dudit terminal, conditionnellement à la vérification réussie dudit certificat de verrouillage et à la validité du code utilisateur introduit, lesdits moyens de verrouillage et d'autorisation permettant de maintenir ledit terminal ou ladite fonction spécifique verrouillée, en l'absence d'autorisation d'utilisation, sinon.

12. Système selon la revendication 11, **caractérisé en ce que** ledit terminal utilisateur comporte en outre des moyens de mémorisation d'au moins un code utilisateur associé à une fonction dudit terminal, un certificat de verrouillage et un certificat de déverrouillage.

13. Produit de programme d'ordinateur comportant une suite d'instructions mémorisées sur un support de mémorisation pour exécution par un ordinateur ou par un terminal utilisateur muni d'un processeur de sécurité, **caractérisé en ce que**, lors de cette exécution, ledit programme exécute les étapes du procédé selon l'une des revendications 1 à 10.

14. Produit de programme d'ordinateur selon la revendication 13, **caractérisé en ce que** ledit programme comporte des modules de programmes de cryptographie à clé publique implantés dans ledit module cryptographique dudit processeur de sécurité et permettant la vérification d'un certificat de verrouillage.

15. Produit de programme d'ordinateur selon la revendication 13 ou 14, **caractérisé en ce que** ledit programme comporte en outre des modules de commande de déverrouillage et d'autorisation de l'utilisation du terminal ou d'une fonction du terminal, conditionnellement à la vérification réussie dudit certificat de verrouillage et à la validité du code utilisateur introduit, ou de maintien du terminal ou d'une fonction de service de ce terminal en l'état, sinon, lesdits modules de commande étant implantés en zone protégée dudit processeur de sécurité.

**Claims**

1. A method of controlling the locking/unlocking of the network access functions of a multifunction terminal including a security processor, executing a public-key cryptography system, **characterized in that** it consists at least in:

   a) allotting said terminal an original public key ($K_{Mpub}$) serving to verify the integrity of the data loaded into said terminal;
   b) generating a pair of keys, public key ($KOP_{pub}$) , private key ($KOP_{priv}$) associated with the access network of said terminal;
   c) generating an original approval certificate for the terminal ($CERT_{AM}$) containing said public keys, original public key and public key associated with the access network of said terminal;
   d) establishing for initialization a locking certificate for said terminal ($CERT_{lock}$) containing at least said original approval certificate for the terminal ($CERT_{AM}$), data for initial configuration of this terminal and a sequence of random data, and storing said locking certificate and said public key ($KOP_{pub}$) associated with the access network of said terminal, signed digitally on the basis of a private key compatible with the original public key ($KMp_{ub}$), in a secure area of said security processor; and,

      • on boot up for use of this terminal by introduction of a code by a user;

   e) in the absence of an unlocking certificate ($CERT_{unlock}$) for at least one function of the terminal or in the presence of an invalid unlocking certificate ($CERT_{unlock}$) , verifying at least the integrity of said locking certificate ($CERT_{lock}$) and the elements contained in this locking certificate; and
   f) unlocking and authorizing the use of the terminal or of a specific function of this terminal, conditionally upon the successful verification of said locking certificate and upon the validity of the code introduced; and keeping said terminal or said specific function locked and not authorizing the use thereof, otherwise.

2. Method according to Claim 1, **characterized in that**, in the presence of a valid unlocking certificate ($CERT_{unlock}$), said unlocking certificate is substituted for said locking certificate ($CERT_{lock}$) in order to continue the process.

3. Method according to one of Claims 1 or 2, **characterized in that** the step of verifying said locking certificate ($CERT_{lock}$) includes at least the transmission, from said terminal to said security processor, of the locking certificate ($CERT_{lock}$), of the unlocking certificate ($CERT_{unlock}$) if it exists and of the user code.

4. Method according to Claim 3, **characterized in that** said security processor furthermore executes:

   - verifying the integrity of the original approval certificate for the terminal ($CERT_{AM}$); and, on a successful verification,
   - validating the locking certificate ($CERT_{lock}$) by means of said original public key ($K_{Mpub}$) ; and, following this validation,
   - establishing the whole set of codes that can be introduced by the user, on the basis of said random data sequence contained in said locking certificate ($CERT_{lock}$) and of a specific function executed by said security processor.

5. Method according to Claim 4, **characterized in that** said specific function makes it possible to generate the whole set of valid unique codes that can be generated by the user, a code associated with a function of the terminal being generated for one and only one terminal.

6. Method according to Claim 4 or 5, **characterized in that** said security processor compares any code entered by the user with the whole set of valid unique codes, and,

   - if the code entered by the user does not correspond to any of the codes of the set of valid unique codes, said security processor generates an error code, returned to said terminal and the configuration of the terminal corresponding to the locking certificate ($CERT_{lock}$) or to an unlocking certificate ($CERT_{unlock}$) that is preexisting is kept; otherwise,
- if the code entered by the user corresponds to a unique code of the set of unique codes, said security processor generates an unlocking certificate ($CERT_{unlock}$) relating to the corresponding function and verifies the integrity of this unlocking certificate.

7. Method according to one of Claims 1 to 6, **characterized in that** step a) is executed by the manufacturer of terminals.

8. Method according to one of Claims 1 to 7, **characterized in that** step b) is executed by the operator or network access provider.

9. Method according to one of Claims 1 to 8, **characterized in that** step c) is executed either by the manufacturer of terminals, or by the operator or the network access provider.

10. Method according to one of Claims 1 to 9, **characterized in that** said step d) is executed by the manufacturer of terminals.

11. System for controlling the locking/unlocking of the network access functions of a multifunction terminal, this terminal including a security processor, executing a public-key cryptography system, said security processor comprising at least one secure input/output control circuit, a microcontroller and at least one public-key cryptography module, **characterized in that** said terminal comprises at least:

   - means for storing cryptographic data including an original public key serving to verify the integrity of the data loaded into said terminal, a public key of a pair of keys, public key, private key associated with the access network of said terminal, and original approval certificate for said terminal containing said public keys, original public key and public key associated with said access network of the terminal; and, **in that** the cryptography module of said security processor includes at least:

      - secure means for storing a private key compatible with said original public key;
      - means for calculating a locking certificate for said terminal containing at least said original approval certificate for the terminal, data for configuration of this terminal and a sequence of random data;
      - means for digitally signing said locking certificate and said public key associated with the access network of said terminal, by means of said private key compatible with said original public key;
      - and **in that** said cryptography module of said security processor further comprises:

         - means for verifying, in the absence of an unlocking certificate for at least one function of said terminal or in the presence of an invalid unlocking certificate, the integrity of said locking certificate and of the elements contained in this locking certificate, and **in that** said terminal further includes:
         - means for unlocking and authorizing the use of said terminal or of a specific function of said terminal, conditionally upon the successful verification of said locking certificate and upon the validity of the user code introduced, said locking and authorization means making it possible to keep said terminal or said specific function locked, in the absence of authorization for use, otherwise.

12. System according to Claim 11, **characterized in that** said user terminal furthermore comprises means for storing at least one user code associated with a function of said terminal, a locking certificate and an unlocking certificate.

13. Computer program product comprising a series of instructions stored on a storage medium for execution by a computer or by a user terminal including a security processor, **characterized in that**, during this execution, said program executes the steps of the method according to one of Claims 1 to 10.

14. Computer program product according to Claim 13, **characterized in that** said program comprises modules of public-key cryptography programs installed in said cryptographic module of said security processor adapted to execute the verification of a locking certificate.

15. Computer program product according to Claim 13 or 14, **characterized in that** said program furthermore includes modules for commanding unlocking and authorization of the use of the terminal or of a function of the terminal, conditionally upon the successful verification of said locking certificate and upon the validity of the user code introduced, or for keeping the terminal or a service function of this terminal in its state, otherwise, said command modules being installed in a protected area of said security processor.

**Patentansprüche**

1.  Verfahren zum Steuern der Verriegelung/Entriegelung von Netzzugangsfunktionen eines multifunktionalen Endgeräts, das mit einem Sicherheitsprozessor versehen ist, der ein System zur Verschlüsselung mit öffentlichem Schlüssel ausführt, **dadurch gekennzeichnet, dass** es wenigstens darin besteht:

    (a) dem Endgerät einen ursprünglichen öffentlichen Schlüssel ($K_{Mpub}$) zuzuweisen, der dazu dient, die Integrität der in das Endgerät geladenen Daten zu verifizieren;
    (b) ein Schlüsselpaar zu erzeugen, nämlich einen öffentlichen Schlüssel ($KOP_{pub}$) und einen privaten Schlüssel ($KOP_{priv}$), die dem Zugangsnetz des Endgeräts zugeordnet sind;
    (c) ein Ursprungszulassungszertifikat des Endgeräts ($CERT_{AM}$) zu erzeugen, das die öffentlichen Schlüssel, nämlich den ursprünglichen öffentlichen Schlüssel und den dem Zugangsnetz des Endgeräts zugeordneten öffentlichen Schlüssel enthält;
    (d) für die Initialisierung ein Verriegelungszertifikat ($CERT_{lock}$) des Endgeräts herzustellen, das wenigstens das Ursprungszulassungszertifikat ($CERT_{AM}$) des Endgeräts, die anfänglichen Konfigurationsdaten dieses Endgeräts und eine Folge von Zufallsdaten enthält, und das Verriegelungszertifikat und den dem Zugangsnetz des Endgeräts zugeordneten öffentlichen Schlüssel ($KOP_{pub}$), die ausgehend von einem mit dem ursprünglichen öffentlichen Schlüssel ($KM_{pub}$) kompatiblen privaten Schlüssel digital signiert sind, in einer gesicherten Zone des Sicherheitsprozessors zu speichern; und

    - beim Starten für die Nutzung dieses Endgeräts durch Eingabe eines Codes durch einen Anwender:

    (e) bei Fehlen eines Zertifikats ($CERT_{unlock}$) für die Entriegelung wenigstens einer Funktion des Endgeräts oder bei Vorhandensein eines ungültigen Entriegelungszertifikats ($CERT_{unlock}$) zumindest die Integrität des Verriegelungszertifikats ($CERT_{lock}$) und die in diesem Verriegelungszertifikat enthaltenen Elemente zu verifizieren; und
    (f) die Verwendung des Endgeräts oder eine spezifische Funktion dieses Endgeräts in Abhängigkeit von der erfolgreichen Verifikation des Verriegelungszertifikats und der Gültigkeit des eingegebenen Codes zu entriegeln und zuzulassen und andernfalls das Endgerät oder die spezifische Funktion verriegelt zu halten und die Nutzung nicht zuzulassen.

2.  Verfahren nach Anspruch 1, **dadurch gekennzeichnet, dass** bei Vorhandensein eines gültigen Entriegelungszertifikats ($CERT_{unlock}$) das Verriegelungszertifikat ($CERT_{lock}$) durch das Entriegelungszertifikat ersetzt wird, um den Prozess fortzusetzen.

3.  Verfahren nach einem der Ansprüche 1 oder 2, **dadurch gekennzeichnet, dass** der Schritt der Verifikation des Verriegelungszertifikats ($CERT_{lock}$) wenigstens die Übertragung des Verriegelungszertifikats ($CERT_{lock}$), des Entriegelungszertifikats ($CERT_{unlock}$), falls vorhanden, und des Anwendercodes von dem Endgerät an den Sicherheitsprozessor enthält.

4.  Verfahren nach Anspruch 3, **dadurch gekennzeichnet, dass** der Sicherheitsprozessor außerdem ausführt:

    - die Verifikation der Integrität des Ursprungszulassungszertifikats ($CERT_{AM}$) des Endgeräts; und bei erfolgreicher Verifikation
    - die Validierung des Verriegelungszertifikats ($CERT_{lock}$) mittels des ursprünglichen öffentlichen Schlüssels ($K_{MPub}$); und nach dieser Validierung
    - die Herstellung der Gesamtheit von Codes, die durch den Anwender eingegeben werden können, anhand der Folge von Zufallsdaten, die in dem Verriegelungszertifikat ($CERT_{lock}$) enthalten ist, und einer spezifischen Funktion, die durch diesen Sicherheitsprozessor ausgeführt wird.

5.  Verfahren nach Anspruch 4, **dadurch gekennzeichnet, dass** die spezifische Funktion ermöglicht, die Gesamtheit gültiger eindeutiger Codes, die durch den Anwender erzeugt werden können, zu erzeugen, wobei ein einer Funktion des Endgeräts zugeordneter Code für ein und nur ein Endgerät erzeugt wird.

6.  Verfahren nach einem der Ansprüche 4 oder 5, **dadurch gekennzeichnet, dass** der Sicherheitsprozessor jeden Code, der durch den Anwender eingegeben wird, mit der Gesamtheit der gültigen eindeutigen Codes vergleicht und

- falls der durch den Anwender eingegebene Code keinem der Codes der Gesamtheit gültiger eindeutiger Codes entspricht, der Sicherheitsprozessor einen Fehlercode erzeugt, der an das Endgerät zurückgeleitet wird, und die Konfiguration des Endgeräts, die dem Verriegelungszertifikat ($CERT_{lock}$) oder einem bereits vorhandenen Entriegelungszertifikat ($CERT_{unlock}$) entspricht, beibehalten wird; andernfalls
- falls der durch den Anwender eingegebene Code einem eindeutigen Code der Gesamtheit eindeutiger Codes entspricht, der Sicherheitsprozessor ein Entriegelungszertifikat ($CERT_{unlock}$) bezüglich der entsprechenden Funktion erzeugt und die Integrität dieses Entriegelungszertifikats verifiziert.

7. Verfahren nach einem der Ansprüche 1 bis 6, **dadurch gekennzeichnet, dass** der Schritt a) durch den Endgeräteteherstellter ausgeführt wird.

8. Verfahren nach einem der Ansprüche 1 bis 7, **dadurch gekennzeichnet, dass** der Schritt b) von dem Betreiber oder dem Anbieter des Zugangsnetzes ausgeführt wird.

9. Verfahren nach einem der Ansprüche 1 bis 8, **dadurch gekennzeichnet, dass** der Schritt c) entweder vom Endgerätehersteller oder vom Betreiber oder dem Anbieter des Zugangsnetzes ausgeführt wird.

10. Verfahren nach einem der Ansprüche 1 bis 9, **dadurch gekennzeichnet, dass** der Schritt d) vom Endgerätehersteller ausgeführt wird.

11. System zum Steuern der Verriegelung/Entriegelung von Netzzugangsfunktionen eines multifunktionalen Endgeräts, wobei dieses Endgerät mit einem Sicherheitsprozessor versehen ist, der ein Verschlüsselungssystem mit öffentlichem Schlüssel ausführt, wobei der Sicherheitsprozessor wenigstens eine gesicherte Eingabe/Ausgabe-Steuerschaltung, einen Mikrocontroller und wenigstens ein Verschlüsselungsmodul mit öffentlichem Schlüssel umfasst, **dadurch gekennzeichnet, dass** das Endgerät wenigstens umfasst:

- Mittel zum Speichern von Verschlüsselungsdaten einschließlich eines ursprünglichen öffentlichen Schlüssels, der dazu dient, die Integrität der in das Endgerät geladenen Daten zu verifizieren, eines öffentlichen Schlüssels eines Paars von Schlüsseln, nämlich eines öffentlichen Schlüssels und eines privaten Schlüssels, die dem Zugangsnetz des Endgerätes zugeordnet sind, und eines Ursprungszulassungszertihkats des Endgeräts, das die öffentlichen Schlüssel, nämlich den ursprünglichen öffentlichen Schlüssel und den dem Zugangsnetz des Endgeräts zugeordneten öffentlichen Schlüssel enthält; und dass das Verschlüsselungsmodul des Sicherheitsprozessors wenigstens umfasst:

   - gesicherte Speichermittel für einen mit dem ursprünglichen öffentlichen Schlüssel kompatiblen privaten Schlüssel;
   - Mittel zum Berechnen eines Verriegelungszertifikats des Endgeräts, das wenigstens das Ursprungszulassungszertifikat des Endgeräts, Konfigurationsdaten dieses Endgeräts und eine Folge von Zufallsdaten enthält;
   - Mittel zur digitalen Signatur des Verriegelungszertifikats und des dem Zugangsnetz des Endgeräts zugeordneten öffentlichen Schlüssels mittels des mit dem ursprünglichen öffentlichen Schlüssel kompatiblen privaten Schlüssels;
   - und dass das Verschlüsselungsmodul des Sicherheitsprozessors außerdem umfasst:

      - Mittel, um bei Fehlen des Entriegelungszertifikats wenigstens einer Funktion des Endgeräts oder bei Vorhandensein eines ungültigen Entriegelungszertifikats die Integrität des Verriegelungszertifikats und der in diesem Verriegelungszertifikat enthaltenen Elemente zu verifizieren, und dass das Endgerät außerdem umfasst:
      - Mittel zum Entriegeln und Zulassen der Nutzung des Endgeräts oder einer spezifischen Funktion des Endgeräts in Abhängigkeit von der erfolgreichen Verifikation des Verriegelungszertifikats und der Gültigkeit des eingegebenen Anwendercodes, wobei die Mittel zum Verriegeln und Zulassen andernfalls ermöglichen, das Endgerät oder die spezifische Funktion bei Abwesenheit der Zulassung der Nutzung verriegelt zu halten.

12. System nach Anspruch 11, **dadurch gekennzeichnet, dass** das Anwenderendgerät außerdem Mittel zum Speichern wenigstens eines einer Funktion des Endgeräts zugeordneten Anwendercodes, eines Verriegelungszertifikats und eines Entriegelungszertifikats umfasst.

**13.** Computerprogrammprodukt, das eine Folge von Befehlen enthält, die auf einen Speicherträger gespeichert sind, um durch einen Computer oder durch ein mit einem Sicherheitsprozessor versehenes Anwenderendgerät ausgeführt zu werden, **dadurch gekennzeichnet, dass** bei dieser Ausführung das Programm die Schritte des Verfahrens nach einem der Ansprüche 1 bis 10 ausführt.

**14.** Computerprogrammprodukt nach Anspruch 13, **dadurch gekennzeichnet, dass** das Programm Verschlüsselungsprogrammmodule mit öffentlichem Schlüssel, die in das Verschlüsselungsmodul des Sicherheitsprozessors implantiert sind und die Verifikation eines Verriegelungsschlüssels ermöglichen, enthält.

**15.** Computerprogrammprodukt nach Anspruch 13 oder 14, **dadurch gekennzeichnet, dass** das Programm außerdem Module zum Steuern der Entriegelung und der Zulassung der Nutzung des Endgeräts oder einer Funktion des Endgeräts in Abhängigkeit von der erfolgreichen Verifikation des Verriegelungszertifikats und von der Gültigkeit des angegebenen Anwendercodes oder andernfalls zum Halten des Endgeräts oder einer Dienstfunktion dieses Endgeräts in seinem bzw. ihrem Zustand umfasst, wobei diese Steuermodule in eine geschützte Zone des Sicherheitsprozessors implantiert sind.

FIG.1.

$T\left[SP(\cdot,\cdot)\right]^{N}$

TM $\{$ $\left[T, K_{Mpub}\right]$ — A

NO $\{$ $\left[N(KOP_{pub}, KOP_{priv})\right]$ — B

TM OU NO $\{$ $CERT_{AM}(K_{Mpub}, KOP_{pub})$ — C

TM $\{$ $CERT_{lock}(CERT_{AM}(-,-); KMpub; KOP_{pub}; Config_k; Rand)$ — D

$\mathscr{S}_{KMpr}(CERT_{lock}(-,-,-,-,-); KOP_{pub})$ — E

T $\{$ U_CODE → U — CODE (Fj) — F

$CERT_{unlock} \overset{=}{} \phi?$ — G

+  —

H — $V(CERT_{lock}) \overset{=}{} VRAI?$ — 

L — $CERT_{unlock}$ valide? — 

— +

$CERT_{lock} \equiv CERT_{unlock}$ — M

I — U — CODE = VRAI?

J — VERROUILLAGE T OU Fj

DÉVERROUILLAGE T OU Fj — K

FIG.2.

CERT$_{lock}$ CERT$_{unlock}$
U_CODE

TRANSMISSION
T$_k$(CERT$_{lock}$, CERT$_{unlock}$, U_CODE)
$\longrightarrow$ SP($\cdot$, $\cdot$)   H$_0$

$\sigma_{KMpub}$(CERT$_{AM}$(-, -))   H$_1$

$\sigma_{KMpub}$(CERT$_{unlock}$(-, -, -, -))   H$_2$

SF$_k$(RANDOM, F$_j$)
$\longrightarrow$ $\{UC_{jk}\}_{j=1}^{j=J}$   I$_0$

U_CODE $\in \{UC_{jk}\}_{j-1}^{j-J}$
U_CODE = UC$_{jk}$ ?   I$_1$

CERT$_{unlock}$(F$_j$)   I$_2$

VERS J

FIG.3.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004025896 A